# EUROPÄISCHE PATENTSCHRIFT

(11) **EP 2 394 870 B1**
(45) Veröffentlichungstag und Bekanntmachung des Hinweises auf die Patenterteilung: **17.10.2012**
(21) Anmeldenummer: 11165932.2
(22) Anmeldetag: 12.05.2011
(51) Int. Cl.: B60R 21/38, F16F 9/02, F16F 13/00

(54) **Federeinrichtung an einer schwenkbaren Klappe eines Kraftfahrzeugs**
Spring device on a pivoting flap of a motor vehicle
Dispositif de ressort sur un clapet basculant d'un véhicule automobile

(30) Priorität: 08.06.2010 DE 102010029816; 06.10.2010 DE 102010042015
(43) Veröffentlichungstag der Anmeldung: 14.12.2011
(73) Patentinhaber: Stabilus GmbH, 56070 Koblenz (DE)
(72) Erfinder: Köstler, Ulrich, 85241, Hebertshausen (DE); Köhler, Arne, 81373, München (DE); Urlich, Christoph, 56283, Kratzenburg (DE); Kaiser, Nadja, 56075, Koblenz (DE)
(74) Vertreter: Klein, Thomas

(56) Entgegenhaltungen:
- DE-A1- 10 252 560
- DE-A1- 10 261 860
- DE-A1- 10 325 351
- DE-A1- 19 922 454
- DE-A1-102005 034 557

## Beschreibung

Die Erfindung betrifft eine Federeinrichtung an einer schwenkbaren Klappe eines Kraftfahrzeugs, mit den im Oberbegriff des Patentanspruches 1 angegebenen Merkmalen.

Eine derartige Federeinrichtung ist in der DE 36 00 845 A1 beispielsweise an einer Heckklappe eines Kraftfahrzeugs vorgesehen, die zwischen der Karosserie des Kraftfahrzeugs und der Heckklappe eine Gasfeder und eine vorgespannte Zusatzfeder aufweist. Der Arbeitshub der Gasfeder ist so gewählt, dass die Gasfeder beim Schließen der geöffneten Heckklappe ihre voll eingefahrene Lage erreicht, bevor die Heckklappe geschlossen ist. Die Vorspannung der Zusatzfeder ist so gewählt, dass sie größer oder gleich der Ausstoßkraft der voll eingefahrenen Gasfeder ist. Nachdem die Gasfeder ihre voll eingefahrene Lage erreicht hat und in Anlage an der vorgespannten Zusatzfeder gekommen ist, wird beim weiteren Schließen der Heckklappe die Zusatzfeder weiter komprimiert, bis sie ein mittleres Längenmaß erreicht hat. Dies hat beispielsweise beim Überfahren von Bodenwellen den Vorteil, dass die Gasfeder keine die Haltbarkeit beeinträchtigenden Bewegungen ausführt. Eventuelle elastische Verformungen der Karosserie des Kraftfahrzeugs bzw. der Heckklappe werden über die komprimierte Zusatzfeder ausgeglichen. Nach dem Entriegeln eines Schlosses der Heckklappe bewirken die Gasfeder und die Zusatzfeder ein Öffnen der Heckklappe bis in eine der Schließlage nahe Vorschließlage, in der die Zusatzfeder ihre maximale, von einem Anschlag begrenzte Länge erreicht hat, Danach bewirkt lediglich die Gasfeder ein vollständiges Öffnen der Heckklappe oder unterstützt ein manuelles Öffnen der Heckklappe. Bei dieser Federeinrichtung übersteigt die Vorspannkraft der Zusatzfeder die Gaskraft der vollständig eingefahrenen Gasfeder erheblich, wodurch ein manuelles Schließen der Heckklappe erschwert bzw. nicht ohne weiteres möglich ist. Es sind deshalb zusätzliche, kraftbetätigte Verriegelungsmittel vorgesehen, die ein kraftbetätigtes Schließen der Heckklappe von der Vorschließlage in die Schließlage ermöglichen und hierzu ein mehrstufiges Schließen der Heckklappe erfordern. Außerdem erhöhen die kraftbetätigten Verriegelungsmittel den Fertigungs- und Kostenaufwand für die Federeinrichtung beachtlich.

Der Erfindung liegt die Aufgabe zu Grunde, eine Federeinrichtung an einer schwenkbaren Klappe eines Kraftfahrzeugs mit den Merkmalen im Oberbegriff des Patentanspruches 1 anzugeben, die bei einem Störfall, bei dem die Gasfeder keinen oder einen abgefallenen Gasdruck aufweist, vor einem Aufprall beispielsweise eines Fußgängers auf die Frontklappe die Frontklappe in der hochgestellten Fußgängerschutzlage halten kann.

Diese Aufgabe ist durch die Merkmale im Patentanspruch 1 gelöst. Vorteilhafte Ausgestaltungen der Erfindung sind den Unteransprüchen entnehmbar.

Dadurch, dass die Klappe eine Frontklappe ist, die von einem von einer Sensoreinrichtung aktivierbaren Aktor vor einem Aufprall beispielsweise eines Fußgängers auf die Frontklappe in eine Fußgängerschutzlage hochstellbar ist, und die Zusatzfeder mit einer Vorspannkraft vorgespannt ist, die bei einem Störfall, bei dem die Gasfeder keinen oder einen abgefallenen Gasdruck aufweist, ausreichend ist, um vor dem Aufprall die Frontklappe in der hochgestellten Fußgängerschutzlage zu halten, ist sichergestellt dass sich bei dem unfallbedingten Aufprall beispielsweise eines Fußgängers auf die Frontklappe diese in einer zum Abfangen des Aufpralls optimalen Lage befindet. Eine unter der Frontklappe angeordnete Federungs- und/oder Dämpfungseinrichtung kann dann wie konstruktiv vorgesehen den Aufprall derart abfangen, dass beispielsweise der auf die Frontklappe aufprallende Fußgänger nicht oder nicht wesentlich verletzt wird. Der konstruktive Aufwand für die Federungseinrichtung ist gering und erfordert lediglich ein eher geringes Vorspannen der Zusatzfeder, die eine flach verlaufende Kennlinie aufweisen kann, wodurch sich die Frontklappe nach einem Hochstellen in die Fußgängerschutzlage mühelos manuell in die Schließlage bzw. Ausgangslage zurück verstellen lässt.

Drei Ausführungsbeispiele der Erfindung werden anhand einer Zeichnung näher erläutert. Es zeigen
- Fig. 1: ein erstes Ausführungsbeispiel in einem vereinfachten Querschnitt durch eine Federeinrichtung mit einer Zusatzfeder, die eine Gasfeder umgibt und in ihre maximal ausgefahrene Endlage belastet,
- Fig. 2: eine repräsentative, vereinfachte Kraft-Weg-Kennlinie der durch die Gasfeder und die Zusatzfeder gebildeten Baueinheit,
- Fig. 3: ein zweites Ausführungsbeispiel in einer Fig. 1 entsprechenden Ansicht und
- Fig. 4: ein drittes Ausführungsbeispiel in einem Querschnitt durch die Gasfeder, die eine schwenkbare Frontklappe eines Kraftfahrzeugs in die Fußgängerschutzlage und beim normalen Öffnen die Frontklappe zumindest teilweise in Richtung einer maximalen Offenlage verstellen kann.

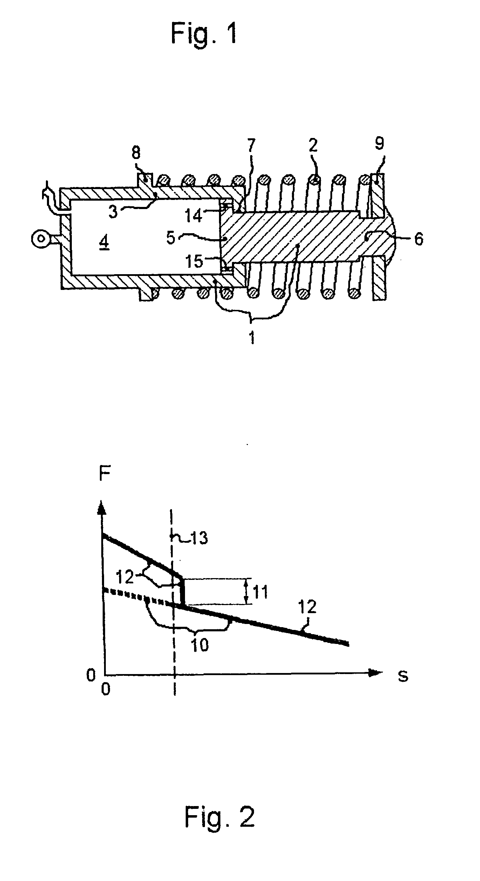

In Figur 1 ist gemäß einem ersten Ausführungsbeispiel eine Federeinrichtung in einem Querschnitt vereinfacht dargestellt, die eine zu einer Baueinheit vereinigte Gasfeder 1 und eine die Gasfeder 1 umgebende Zusatzfeder 2 aufweist. Die Federeinrichtung ist an einer nicht dargestellten schwenkbaren Frontklappe eines Kraftfahrzeugs angeordnet, wobei hierzu beispielsweise ein axial äußerer Bereich eines in der Figur unvollständig und vereinfacht dargestellten Zylinders 3 der Gasfeder 1 mit der Frontklappe verbunden ist.

Die Gasfeder 1 weist in einem druckbelasteten Hohlraum 4 einen axial verstellbaren Kolben 5 auf, der an einer Stirnseite mit einer Kolbenstange 6 verbunden ist, die durch eine axiale Öffnung 7 im Zylinder 3 nach außen absteht. Der als Differenzdruckkolben ausgebildete Kolben 5 trennt zwei gemeinsam druckbelastete Arbeitsräume des Zylinders 3, die über axiale Drosselöffnungen 14, 15 im Kolben 5 verbunden sind.

Die mit einer vorgegebenen Vorspannung druckbelastete Zusatzfeder 2, die bei dem Ausführungsbeispiel eine metallische Schraubenfeder 2 ist, belastet den Kolben 5 bzw. die damit verbundene Kolbenstange 6 in die in Fig. 1 dargestellte axiale Lage, in der die Kolbenstange 6 ihre maximal ausgefahrene Endlage einnimmt, die bei dem Ausführungsbeispiel der Fußgängerschutzlage entspricht. Die Zusatzfeder 2 stützt sich jeweils axial einerseits an einer Stützschulter 8 am Zylinder 3 und an einer Beilagscheibe 9 ab, die am vorstehenden Ende der Kolbenstange 6 befestigt ist. Die Beilagscheibe 9 weist beispielsweise der deutschen Norm entsprechende DIN-Maße auf.

Die nicht dargestellte Frontklappe ist von einem von einer Sensoreinrichtung aktivierbaren, nicht dargestellten Aktor vor einem Aufprall beispielsweise eines Fußgängers auf die Frontklappe in eine Fußgängerschutzlage hochstellbar, wobei die Gasfeder 1 und die vorgespannte Zusatzfeder 2 unterstützend wirken.

Hat der nicht dargestellte, beispielsweise pyrotechnisch wirkende Aktor die nicht dargestellte Frontklappe in ihre erhöhte Fußgängerschutzlage oder kurzzeitig darüber hinaus nach oben verstellt, verliert er sehr bald seine Kraft. Er ist insbesondere nicht in der Lage, vor einem nachfolgenden Aufprall eines Fußgängers auf die Frontklappe die Frontklappe in ihrer Fußgängerschutzlage zu halten,

Hierzu sind die Gasfeder 1 und die Zusatzfeder 2 vorgesehen, die nach einer Verlagerung der Frontklappe in die Fußgängerschutzlage, die Frontklappe in der Fußgängerschutzlage halten sollen, da in der Fußgängerschutzlage eine unter der Frontklappe befindliche Federungs- und/oder Dämpfungseinrichtung, die auch von dem Aktor zumindest mit gebildet sein kann, den Aufprall - wie konstruktiv vorgesehen - besonders günstig abfangen kann. Verletzungen können dabei vermieden oder wesentlich herab gesetzt sein.

Bei einem eventuellen Störfall, beispielsweise nach einigen Jahren, kann die Gasfeder 1 eventuell keinen oder einen abgefallenen Gasdruck aufweisen. Damit sich jedoch auch in diesem Fall die von dem Aktor in die Fußgängerschutzlage hochgestellte Frontklappe vor einem nachfolgenden Aufprall eines Fußgängers auf die Frontklappe in ihrer Fußgängerschutzlage befindet, weist die Zusatzfeder 2 gemäß Fig. 2 eine Vorspannkraft auf, die ausreichend ist, damit vor dem angenommenen Aufprall die Zusatzfeder 2 allein die Frontklappe in der hochgestellten Fußgängerschutzlage halten kann. In Fig. 2 ist der vertikale Weg s der Frontklappe von der Schließlage in die Fußgängerschutzlage gleich Null (0), wenn die Frontklappe normal geschlossen und beispielsweise von wenigstens einem vorderen Haubenschloss zumindest in Höhenrichtung fixiert ist.

In zahlreichen Veröffentlichungen, beispielsweise in der EP 2 096 007 A1 ist beschrieben, wie eine mit einer Fußgängerschutzeinrichtung versehene geschlossene Frontklappe zumindest bereichsweise, beispielsweise im Bereich wenigstens eines hinteren Scharniers in eine etwas angehobene Fußgängerschutzlage verstellbar ist.

Eine damit zumindest näherungsweise vergleichbare Fußgängerschutzeinrichtung ist auch bei dem Ausführungsbeispiel verwendet, wobei zusätzlich die Gasfeder 1 und die Zusatzfeder 2 verwendet sind.

Die bestimmungsgemäß funktionierende Gasfeder 1 ist von der Schließlage zumindest bis in die Fußgängerschutzlage jeweils der Frontklappe wirksam, wobei die Gasfeder 1 einen mit zunehmender Höhenlage der Frontklappe linear oder nichtlinear abnehmenden Kraftverlauf, beispielsweise den linearen Kraftverlauf 10 in Fig. 2 aufweist. Die zur Gasfeder 1 koaxial, prinzipiell parallel angeordnete Zusatzfeder 2, ist bei maximal ausgefahrener Kolbenstange 6 der Gasfeder 1 mit einer Vorspannkraft 11 vorgespannt. Die Baueinheit aus der Gasfeder 1 und der Zusatzfeder 2 weist die in Fig. 2 durch eine durchgehende, zweifach abgeknickte Linie dargestellte Kennlinie 12 auf. Zwischen den beiden Knickstellen verläuft die Kennlinie 12 vertikal, wobei die Höhendifferenz der beiden Knickstellen der Vorspannkraft 11 der Zusatzfeder 2 bei - wie in Fig. 1dargestellt - maximal aus dem Zylinder 3 ausgefahrender Kolbenstange 6 entspricht.

Bei dem Ausführungsbeispiel ist die Vorspannkraft 11 so gewählt, dass bei dem angegebenen Störfall, bei dem die Gasfeder 1 keinen oder einen abgefallenen Gasdruck aufweist, die Zusatzfeder 2 vor dem angegebenen unfallbedingten Aufprall die Frontklappe allein in der Fußgängerschutzlage halten kann.

In Fig, 2 ist die Fußgängerschutzlage der Frontklappe durch eine vertikale, unterbrochene Linie 13 markiert. Der Lage dieser Linie 13 bezüglich der Kennlinie 12 der Baueinheit der Gasfeder1 und der Zusatzfeder 2 ist zu entnehmen, dass bei dem Ausführungbeispiel in der Fußgängerschutzlage die Zusatzfeder 2 gegenüber ihrer in Fig. 1 dargestellten maximalen Ausfahrlage etwas eingefahren und dadurch etwas stärker als zur Sicherung der Fußgängerschutzlage erforderlich komprimiert ist. Die Lage der Linie 13 könnte in Fig. 2 auch nach links oder nach rechts, maximal bis zu dem vertikalen Sprung der Kennlinie 12 verschoben sein.

Die Kräfte der Gasfeder 1 und der Zusatzfeder 2, die In der Fußgängerschutzlage die Frontklappe nach oben belasten, sind selbstverständlich bei den Kräften zu berücksichtigen, die bei einem Aufprall eines Fußgängers auf die Frontklappe auf den Fußgänger einwirken bzw. einwirken können.

Fig. 2 ist außerdem zu entnehmen, dass die Zusatzfeder 2 von der Schließlage s=0 zumindest bis in die Fußgängerschutzlage 13 der Frontklappe wirksam ist und einen mit zunehmender Höhenlage der Frontklappe - bei dem Ausführungsbeispiel linear abnehmenden Kraftverlauf aufweist, der alternativ auch beliebig nichtlinear verlaufen könnte.

Ferner kann Fig. 2 entnommen werden, dass die Gasfeder 1 und die Zusatzfeder 2 einen in Abhängigkeit von der Höhenlage der Frontklappe jeweils flachen Kraftverlauf aufweisen, der nach einer Verlagerung der Frontklappe in die Fußgängerschutzlage 13 eine manuelle Rückverlagerung der Frontklappe in die Schließlage s=0 ermöglicht bzw. erleichtert.

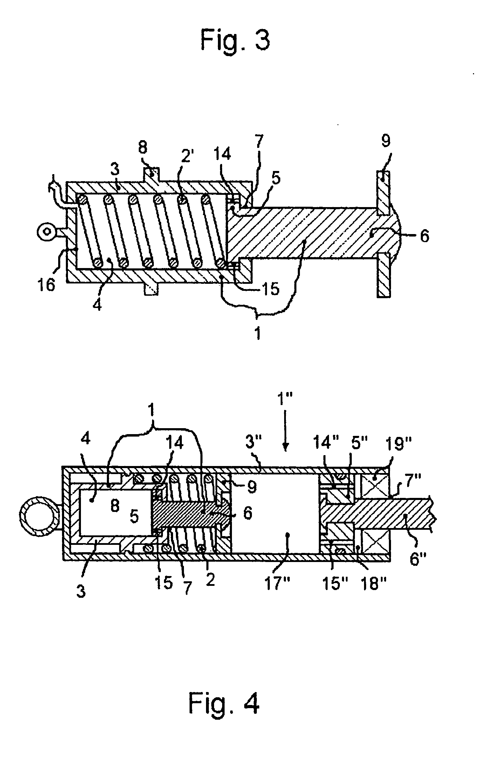

Ein zweites Ausführungsbeispiel einer Federeinrichtung an einer schwenkbaren Klappe eines Kraftfahrzeugs ist in Fig. 3 dargestellt, mit der eine Frontklappe eines Kraftfahrzeugs in eine Fußgängerschutzlage hochstellbar ist. Das zweite Ausführungsbeispiel weist mit dem ersten Ausführungsbeispiel vergleichbare Bauteile auf. Zur Vermeidung einer widerholten Beschreibung von zwischen den beiden Ausführungsbeispielen vergleichbaren oder gleichen Bauteilen sind diese mit einer gleichen Bezugszahl und bezüglich der Zusatzfeder 2' mit einem hochgestellten Zeichen versehen.

Der wesentliche Unterschied des zweiten Ausführungsbeispiels gegenüber dem ersten Ausführungsbeispiel ist, dass bei dem zweiten Ausführungsbeispiel die Zusatzfeder 2' in einem Arbeitsraum des Zylinders 3 angeordnet ist und sich jeweils axial einerseits an dem Kolben 5 und andererseits an einer an dem Zylinder 3 ausgebildeten Stützwand 16 abstützt, die bei diesem Ausführungsbeispiel durch den Boden des Hohlraumes 4 Im Zylinder 3 gebildet ist.

Ein drittes Ausführungsbeispiel der Erfindung ist in Fig. 4 in einem Querschnitt durch eine Gasfeder 1" dargestellt, die einen in einem Zylinder 3" axial verstellbaren Kolben 5" und eine von dem Kolben 5" durch eine axiale Durchgangsöffnung 7" im Zylinder 3" nach außen abstehende Kolbenstange 6" aufweist. Die Durchgangsöffnung 7" ist in einem Führungs- und Dichtungspaket 19" ausgebildet, das die Kolbenstange 5" führt und an dieser Stirnseite den Zylinder 3" abdichtet. Die Gasfeder 1" ist entweder mit ihrem Zylinder 3" oder ihrer Kolbenstange 6" an der Karosserie oder an einem damit verbundenen Bauteil um wenigstens eine reelle oder ideelle Schwenkachse schwenkbar gelenkig befestigt. Das andere Teil, die Kolbenstange 6" oder der Zylinder 3", ist an der Frontklappe eines Kraftfahrzeugs oder an einem damit verbundenen Element um wenigstens eine reelle oder ideelle Schwenkachse schwenkbar gelenkig befestigt.

In dem Kolben ist wenigstens eine Drosselöffnung 14", 15" ausgebildet, die einen gedrosselten Fluiddurchtritt des in den druckbelasteten Arbeitsräumen 17", 18" befindlichen Fluids von einem Arbeitsraum 17" bzw. 18" in den anderen Arbeitsraum 18" bzw. 17" des Zylinders 3" ermöglicht. Das Fluid ist beispielsweise durch Luft gebildet. Der Kolben 5" wirkt bei dem Ausführungsbeispiel als Differenzdruckkolben. Die Gasfeder 1" kann allein oder zusammen mit wenigstens einer weiteren Gasfeder eine schwenkbare, nicht dargestellte Frontklappe eines Kraftfahrzeugs unverzüglich von einer Schließlage in eine Fußgängerschutzlage anheben, wenn eine Sensoreinrichtung einen eingetretenen oder bevorstehenden Aufprall eines Fußgängers auf ein Fahrzeugteil detektiert und zwei zueinander verstellbare, normal miteinander verriegelte bzw. verbundene Verstellteile einer Verstellmechanik der Frontkiappe, voneinander entriegelt bzw. gelöst hat.

Außerdem kann die Gasfeder 1" allein oder zusammen mit wenigstens einer weiteren Gasfeder die Frontklappe beim normalen Öffnen zumindest teilweise in Richtung einer maximalen Offenlage der Frontklappe verstellen.

Bei dem dritten Ausführungsbeispiel ist in den Arbeitsraum 17" der Gasfeder 1" eine Baueinheit mit im Wesentlichen einem weiteren Zylinder 3, in dem ein mit einer Kolbenstange 6 verbundener Kolben 5 axial verstellbar ist, und eine Zusatzfeder 2 eingesetzt. Die Zusatzfeder 2 umgibt jeweils bereichsweise die Kolbenstange 6 und den Zylinder 3 und ist zwischen einer äußeren Stützschulter des Zylinders 3 und einer am vorstehenden Kopfbereich der Kolbenstange 6 befestigten Beilagscheibe 9 axial vorgespannt. Der Kolben 5 ist dadurch in Fig. 4 nach rechts in die dargestellte Endlage belastet. In dieser Endlage liegt der Kolben 5 an einem Boden des Zylinders 3 an, wodurch der zweite, in Fig. 4 rechte Arbeitsraum des Zylinders 3 minimiert ist.

Die in den Arbeitsraum 17" des Zylinders 1" eingesetzte Baueinheit entspricht bei dem Ausführungsbeispiel im Wesentlichen der in Fig. 1 dargestellten Baueinheit, wobei lediglich die in Fig. 1 linke Befestigungsstelle des Zylinders 3 und die von dem Arbeitsraum 4 beispielsweise In einen Speicher oder zu einer Pumpe führende Leitung weggelassen sind. Der im Zylinder 3 axial verstellbare Kolben 5 trennt zwei Arbeitsräume 4 des Zylinders 3, in dem sich ein druckloses oder druckbelastetes Fluid, beispielsweise Luft, befindet.

Die bestimmungsgemäß funktionierende Gasfeder 1" kann die nicht dargestellte Frontklappe eines Kraftfahrzeugs von der Schließlage in eine Fußgängerschutzlage und beim normalen Öffnen der Frontklappe zumindest teilweise in Richtung einer maximalen Öffnungslage allein oder jeweils zusammen beispielsweise mit einer vergleichbaren weiteren Gasfeder anheben.

Die Gasfeder 1" weist einen mit zunehmender Höhenlage der Frontklappe linear oder nichtlinear abnehmenden Kraftverlauf, beispielsweise den linearen Kraftverlauf 10 in Fig. 2 auf. Die zur Gasfeder 1" koaxial, prinzipiell parallel angeordnete Zusatzfeder 2, ist mit einer derartigen Vorspannkraft 11 in Fig. 2 vorgespannt, dass bei einem unvorhergesehenen Ausfall der Gasfeder 1" und eventuell zusätzlich der Gasfeder 1 beispielsweise nach einer mehrjährigen Gebrauchszeit, bei dem der Druck in den Arbeitsräumen 17", 18" der Gasfeder 1" und eventuell zusätzlich in den Arbeitsräumen 4 der Gasfeder 1 abgefallen oder gleich Null ist, die Zusatzfeder 2 allein bzw. zusammen mit einer weiteren vergleichbaren Gasfeder 1" bzw, zusammen mit der dieser Gasfeder zugeordneten Zusatzfeder 2 die Frontklappe in die Fußgängerschutzlage anheben und in der Fußgängerschutzlage halten kann. Dabei stützt sich der Kolben 5" oder die Kolbenstange 6" jeweils der Gasfeder 1" zumindest mittelbar an der Kolbenstange 6 oder dem daran befestigten Zwischenteil 9 axial ab.

Die Erfindung kann selbstverständlich von dem Ausführungsbeispiel abweichend ausgeführt werden. Die Federeinrichtung ist an einer Frontklappe eines Kraftfahrzeugs verwendbar und weist jeweils zwischen der Karosserie des Kraftfahrzeugs und der Frontklappe eine Gasfeder und eine Zusatzfeder auf. Vor einem Aufprall beispielsweise eines Fußgängers auf die Frontklappe ist die Frontklappe von einem aktivierten Aktor, der von einer Sensoreinrichtung aktivierbar ist, in eine Fußgängerschutzlage hochstellbar Die Zusatzfeder ist mit einer Vorspannkraft vorgespannt, die bei einem Störfall, bei dem die Gasfeder keinen oder einen abgefallenen Gasdruck aufweist, ausreichend ist, um vor dem Aufprall die Frontklappe in die Fußgängerschutzlage zu verstellen und in der hochgestellten Fußgängerschutzlage zu halten. Die Zusatzfeder kann eine beliebige Feder, beispielsweise eine Schraubenfeder sein. Die Gasfeder kann eine beliebige Gasfeder sein, die bei einem unfallbedingten Aufprall auf die Frontklappe - wie bei dem Ausführungsbeispiel - dämpfend oder nicht dämpfend wirken kann. Ist die Zusatzfeder beispielsweise - wie bei dem Ausführungsbeispiel - als Schraubenfeder ausgebildet, kann sich diese jeweils axial an einer Stützschulter des Zylinders und/oder an einer Stützschulter der Kolbenstange oder an einem an der betreffenden Stützschulter direkt oder mittelbar abgestützten Zwischenteil abstützen. Das Zwischenteil kann eine Scheibe, beispielweise eine Beilagscheibe oder Federscheibe beispielsweise mit DIN-Maßen sein. Die bestimmungsgemäß funktionierende Gasfeder kann von der Schließlage zumindest bis in die Fußgängerschutzlage jeweils der Frontklappe wirksam sein und einen mit zunehmender Höhenlage der Frontklappe linear oder nichtlinear abnehmenden Kraftverlauf aufweisen. Die Zusatzfeder kann von der Schließlage zumindest bis in die Fußgängerschutzlage jeweils der Frontklappe wirksam sein und einen mit zunehmender Höhenlage der Frontkiappe linear oder nichtlinear abnehmenden Kraftverlauf aufweisen. Die Gasfeder und die Zusatzfeder können einen in Abhängigkeit von der Höhenlage der Frontklappe jeweils flachen Kraftverlauf aufweisen, der nach einer Verlagerung der Frontklappe in die Fußgängerschutzlage eine manuelle Rückverlagerung der Frontklappe in die Schließlage ermöglicht bzw. erleichtert. Die Gasfeder und/oder die Zusatzfeder können durch eine einzige Gasfeder bzw. Zusatzfeder oder durch mehrere Gasfedern bzw. Zusatzfedern gebildet sein, die beispielsweise seitlich gegenüber liegend zu einer ideellen mittleren vertikalen Fahrzeuglängsebene symmetrisch angeordnet sind. Die bei dem dritten Ausführungsbeispiel in einen Arbeitsraum des Zylinders eingesetzte Baueinheit, die im Wesentlichen der Baueinheit in Fig. 1 entspricht, könnte auch analog durch die Baueinheit in Fig. 3 ersetzt sein. Ebenso kann in einen Arbeitsraum der Gasfeder, die beispielsweise die Frontklappe zumindest teilweise in ihre maximale Offenlage verstellen oder dabei zumindest unterstützend wirken kann, lediglich eine Zusatzfeder eingesetzt sein, die in der Wirkung mit einer der beschriebenen Zusatzfedern vergleichbar ist.

## Patentansprüche

1. Federeinrichtung an einer schwenkbaren Klappe eines Kraftfahrzeugs, mit einer Gasfeder und einer Zusatzfeder zwischen der Karosserie des Kraftfahrzeugs und der Klappe, **dadurch gekennzeichnet, dass** die Klappe eine Frontklappe ist, die von einem von einer Sensoreinrichtung aktivierbaren Aktor vor einem Aufprall beispielsweise eines Fußgängers auf die Frontklappe in eine Fußgängerschutzlage hochstellbar ist, und die Zusatzfeder (2, 2') mit einer Vorspannkraft vorgespannt Ist, die bei einem Störfall, bei dem die Gasfeder (1, 1") keinen oder einen abgefallenen Gasdruck aufweist, ausreichend ist, um vor dem Aufprall die Frontklappe in die hochgestellte Fußgängerschutzlage zu verstellen und in der Fußgängerschutzlage zu halten.

2. Federeinrichtung nach Anspruch 1, **dadurch gekennzeichnet, dass** die Zusatzfeder (2, 2') eine Schraubenfeder ist.

3. Federeinrichtung nach Anspruch 1 oder 2, **dadurch gekennzeichnet, dass** die Gasfeder (1, 1") einen In einem Zylinder (3, 3") axial verstellbaren Kolben (5, 5") aufweist, der zwei Arbeitsräume (4 bzw. 17", 18") im Zylinder (3, 3") trennt und mit einer Kolbenstange (6, 6") verbunden ist, die durch eine axiale Öffnung (7, 7") im Zylinder (3, 3") nach außen ragt, oder zusätzlich die Zusatzfeder (2) die Kolbenstange (6) der Gasfeder (1) in ihre maximal ausgefahrene Endlage belastet.

4. Federeinrichtung nach Anspruch 3, **dadurch gekennzeichnet, dass** die Zusatzfeder (2, 2') entweder zumindest einen Bereich des Zylinders (3) und/oder der Kolbenstange (6) jeweils der Gasfeder (1) umgibt und sich jeweils axial einerseits an einer Stützschulter (8) des Zylinders (3) und andererseits an der Kolbenstange oder an einem an dem betreffenden Teil direkt oder mittelbar abgestützten Zwischenteil (9) abstützt, oder die Zusatzfeder (2') in einem Arbeitsraum (4) des Zylinders (3) angeordnet ist und sich jeweils axial einerseits an dem Kolben (5) und andererseits an einer an dem Zylinder (3) ausgebildeten oder mit dem Zylinder verbundenen Stützwand (16) abstützt.

5. Federeinrichtung nach einem der Ansprüche 1 bis 4, **dadurch gekennzeichnet, dass** die bestimmungsgemäß funküonierende Gasfeder (1, 1") von der Schließlage der Frontklappe zumindest bis in die Fußgängerschutzlage (13) der Frontklappe wirksam ist und einen mit zunehmender Höhenlage der Frontklappe linear oder nichtlinear abnehmenden Kraftveriauf aufweist.

6. Federeinrichtung nach einem der Ansprüche 1 bis 5, **dadurch gekennzeichnet, dass** die Zusatzfeder (2, 2') von der Schließlage der Frontklappe zumindest bis in die Fußgängerschutzlage (13) der Frontklappe wirksam ist und einen mit zunehmender Höhenlage der Frontklappe linear oder nichtlinear abnehmenden Kraftverlauf aufweist.

7. Federeinrichtung nach Anspruch 5 und/oder 6, **dadurch gekennzeichnet, dass** die Gasfeder (1, 1") und die Zusatzfeder (2, 2') einen in Abhängigkeit von der Höhenlage der Frontklappe jeweils flachen Kraftverlauf aufweisen, der nach einer Verlagerung der Frontklappe in die Fußgängerschutzlage eine manuelle Rückverlagerung der Frontklappe in die Schließlage ermöglicht bzw. erleichtert.

8. Federeinrichtung nach einem der Ansprüche 1 bis 7, **dadurch gekennzeichnet, dass** die Gasfeder (1,1") und/oder die Zusatzfeder (2, 2') durch eine einzige Gasfeder bzw. Zusatzfeder oder durch mehrere Gasfedern bzw. Zusatzfedern gebildet sind.

9. Federeinrichtung nach einem der Ansprüche 1 bis 8, **dadurch gekennzeichnet, dass** die Gasfeder (1") allein oder zusammen mit wenigstens einer weiteren Gasfeder die Frontklappe beim normalen Öffnen zumindest teilweise in Richtung einer maximalen Offenlage der Frontklappe verstellt und/oder das normale Öffnen der Frontklappe unterstützt.

10. Federeinrichtung nach Anspruch 9, **dadurch gekennzeichnet, dass** in den Arbeitsraum (17") der Gasfeder (1 ") eine Baueinheit eingesetzt ist, die im Wesentlichen einen Zylinder (3), In dem ein mit einer Kolbenstange (6) verbundener Kolben (5) axial verstellbar ist, und eine Zusatzfeder (2) aufweist, die axial vorgespannt ist und den Kolben (5) in eine axiale Endlage belastet, in der die mit dem Kolben (5) verbundenen Kolbenstange (6) größtmöglich aus dem Zylinder (3) in den Arbeitsraum (17") der Gasfeder (1 ") ragt und zu dem Kolben (5") der Gasfeder (1") gerichtet ist.

## Claims

1. Spring device on a pivotable flap of a motor vehicle, with a pneumatic spring and with an additional spring between the body of the motor vehicle and the flap, **characterized in that** the flap is a front flap which can be erected into a pedestrian protection position by an actuator, activatable by a sensor device, before, for example, a pedestrian collides with the front flap, and the additional spring (2, 2') which is prestressed with a prestressing force which, in the event of an accident in which the pneumatic spring (1, 1") has no gas pressure or a decreased gas pressure, is sufficient, before the collision, to adjust the front flap into the erected pedestrian protection position and hold the said front flap in the pedestrian protection position.

2. Spring device according to Claim 1, **characterized in that** the additional spring (2, 2') is a helical spring.

3. Spring device according to Claim 1 or 2, **characterized in that** the pneumatic spring (1, 1") has a piston (5, 5") which is axially adjustable in a cylinder (3, 3") and which separates two working spaces (4 and 17", 18") in the cylinder (3, 3") and is connected to a piston rod (6, 6") which projects outwards through an axial orifice (7, 7") in the cylinder (3, 3"), or, additionally, the additional spring (2) moves the piston rod (6) of the pneumatic spring (1) into its maximum extended end position.

4. Spring device according to Claim 3, **characterized in that** either the additional spring (2, 2") surrounds at least one region of the cylinder (3) and/or the piston rod (6) of the pneumatic spring (1) in each case and in each case is supported axially, on the one hand, on a supporting shoulder (8) of the cylinder (3) and, on the other hand, on the piston rod or on an intermediate part (9) supported directly or indirectly on the respective part or the additional spring (2') is arranged in a working space (4) in the cylinder (3) and in each case is supported axially, on the one hand, on the piston (5) and, on the other hand, on a supporting wall (16) formed on the cylinder (3) or connected to the cylinder.

5. Spring device according to one of Claims 1 to 4, **characterized in that** the pneumatic spring (1, 1") functioning, as intended, is active from the closing position of the front flap at least into the pedestrian protection position (13) of the front flap and has a force profile decreasing linearly or non-linearly with an increasing height position of the front flap.

6. Spring device according to one of Claims 1 to 5, **characterized in that** the additional spring (2, 2') is active from the closing position of the front flap at least into the pedestrian protection position (13) of the front flap and has a force profile decreasing linearly or non-linearly with increasing height position of the front flap.

7. Spring device according to Claim 5 and/or 6, **characterized in that** the pneumatic spring (1, 1") and the additional spring (2, 2') have a force profile which is in each case flat as a function of the height position of the front flap and which allows or facilitates manual redisplacement of the front flap in the closing position after a displacement of the front flap into the pedestrian protection position.

8. Spring device according to one of Claims 1 to 7, **characterized in that** the pneumatic spring (1, 1") and/or the additional spring (2, 2') are formed by a single pneumatic spring or additional spring or by a plurality of pneumatic springs or additional springs.

9. Spring device according to one of Claims 1 to 8, **characterized in that** the pneumatic spring (1"), alone or together with at least one further pneumatic spring, adjusts the front flap, during normal opening, at least partially in the direction of a maximum open position of the front flap and/or assists the normal opening of the front flap.

10. Spring device according to Claim 9, **characterized in that** the working space (17") of the pneumatic spring (1") has inserted into it a structural unit which has essentially a cylinder (3), in which a piston (5) connected to a piston rod (6) is axially adjustable, and an additional spring (2) which is prestressed axially and which loads the piston (5) into an axial end position in which the piston rod (6) connected to the piston (5) projects as far as possible out of the cylinder (3) into the working space (17") of the pneumatic spring (1") and is directed towards the piston (5") of the pneumatic spring (1").

## Revendications

1. Dispositif de ressort sur une trappe basculante d'un véhicule automobile, comprenant un ressort à gaz et un ressort supplémentaire entre la carrosserie du véhicule automobile et la trappe, **caractérisé en ce que** la trappe est une trappe avant qui peut être réglée en hauteur par un actionneur pouvant être activé par un dispositif de capteur avant une collision, par exemple d'un piéton avec la trappe avant, dans une position de protection des piétons, et le ressort supplémentaire (2, 2') est précontraint avec une force de précontrainte qui suffit, dans le cas d'une panne dans laquelle le ressort à gaz (1, 1") ne présente pas de pression de gaz ou une pression de gaz amoindrie, pour régler, avant la collision, la trappe avant dans la position relevée de protection des piétons et la maintenir dans la position de protection des piétons.

2. Dispositif de ressort selon la revendication 1, **caractérisé en ce que** le ressort supplémentaire (2, 2') est un ressort à boudin.

3. Dispositif de ressort selon la revendication 1 ou 2, **caractérisé en ce que** le ressort à gaz (1, 1") présente un piston (5, 5") déplaçable axialement dans un cylindre (3, 3"), qui sépare deux espaces de travail (4, respectivement 17", 18") dans le cylindre (3, 3") et est connecté à une tige de piston (6, 6") qui fait saillie vers l'extérieur à travers une ouverture axiale (7, 7") dans le cylindre (3, 3"), ou en outre, le ressort supplémentaire (2) sollicite la tige de piston (6) du ressort à gaz (1) dans sa position de fin de course sortie au maximum.

4. Dispositif de ressort selon la revendication 3, **caractérisé en ce que** le ressort supplémentaire (2, 2') entoure à chaque fois au moins une région du cylindre (3) et/ou de la tige de piston (6) du ressort à gaz (1) et s'appuie à chaque fois axialement d'une part contre un épaulement de support (8) du cylindre (3) et d'autre part contre la tige de piston ou contre une partie intermédiaire (9) supportée directement ou indirectement sur la partie concernée, ou le ressort supplémentaire (2') est disposé dans un espace de travail (4) du cylindre (3) et s'appuie à chaque fois axialement d'une part sur le piston (5) et d'autre part sur une paroi de support (16) réalisée sur le cylindre (3) ou connectée au cylindre.

5. Dispositif de ressort selon l'une quelconque des revendications 1 à 4, **caractérisé en ce que** le ressort à gaz (1, 1") fonctionnant de manière conforme aux prescriptions est actif depuis la position de fermeture de la trappe avant au moins jusque dans la position de protection des piétons (13), et présente une courbe de force diminuant de manière linéaire ou non linéaire avec l'augmentation de la position en hauteur de la trappe avant.

6. Dispositif de ressort selon l'une quelconque des revendications 1 à 5, **caractérisé en ce que** le ressort supplémentaire (2, 2') est actif depuis la position de fermeture de la trappe avant au moins jusque dans la position de protection des piétons (13) de la trappe avant, et présente une courbe de force diminuant de manière linéaire ou non linéaire avec l'augmentation de la position en hauteur de la trappe avant.

7. Dispositif de ressort selon la revendication 5 et/ou 6, **caractérisé en ce que** le ressort à gaz (1, 1") et le ressort supplémentaire (2, 2') présentent une courbe de force plate respective en fonction de la position en hauteur de la trappe avant, qui, après un transfert de la trappe avant dans la position de protection des piétons, permet ou facilite un déplacement manuel vers l'arrière de la trappe avant dans la position de fermeture.

8. Dispositif de ressort selon l'une quelconque des revendications 1 à 7, **caractérisé en ce que** le ressort à gaz (1, 1") et/ou le ressort supplémentaire (2, 2') sont formés par un ressort à gaz ou un ressort supplémentaire unique ou par plusieurs ressorts à gaz ou ressorts supplémentaires.

9. Dispositif de ressort selon l'une quelconque des revendications 1 à 8, **caractérisé en ce que** le ressort à gaz (1") déplace à lui seul ou conjointement avec au moins un autre ressort à gaz la trappe avant lors de l'ouverture normale au moins partiellement dans la direction d'une position d'ouverture maximale de la trappe avant, et/ou supporte l'ouverture normale de la trappe avant.

10. Dispositif de ressort selon la revendication 9, **caractérisé en ce que** dans l'espace de travail (17") du ressort à gaz (1") est insérée une unité constructive qui présente essentiellement un cylindre (3) dans lequel peut être déplacé axialement un piston (5) connecté à une tige de piston (6), et un ressort supplémentaire (2), qui est précontraint axialement et qui sollicite le piston (5) dans une position d'extrémité axiale dans laquelle la tige de piston (6) connectée au piston (5) pénètre autant que possible hors du cylindre (3) dans l'espace de travail (17") du ressort à gaz (1") et est orientée vers le piston (5") du ressort à gaz (1").
